# EUROPÄISCHE PATENTSCHRIFT

(11) **EP 2 929 217 B1**
(45) Veröffentlichungstag und Bekanntmachung des Hinweises auf die Patenterteilung: **21.02.2018**
(21) Anmeldenummer: 13792593.9
(22) Anmeldetag: 09.11.2013
(51) Int. Cl.: F16H 61/4061, F01P 7/04, F01P 5/04, F16H 61/4069

(54) **VORRICHTUNG ZUR STEUERUNG DES BETRIEBS EINES MITTELS EINES HYDROMOTORS ANTREIBBAREN LÜFTERS EINER KÜHLEINRICHTUNG**
DEVICE FOR CONTROLLING THE OPERATION OF A VENTILATOR, WHICH CAN BE DRIVEN BY A HYDRAULIC MOTOR, OF A COOLING DEVICE
DISPOSITIF DESTINÉ À COMMANDER LE FONCTIONNEMENT D'UN VENTILATEUR APPARTENANT À UN SYSTÈME DE REFROIDISSEMENT ET POUVANT ÊTRE ENTRAÎNÉ PAR UN MOTEUR HYDRAULIQUE

(30) Priorität: 05.12.2012 DE 102012024207
(43) Veröffentlichungstag der Anmeldung: 14.10.2015
(73) Patentinhaber: Hydac Fluidtechnik GmbH, 66280 Sulzbach/Saar (DE)
(72) Erfinder: BÄR, Harald, 66346 Püttlingen (DE); SCHÄFER, Josef, Christian, 66740 Saarlouis (DE)
(74) Vertreter: Bartels & Partner
(86) Internationale Anmeldenummer: PCT/EP2013/003389
(87) Internationale Veröffentlichungsnummer: WO 2014/086456

(56) Entgegenhaltungen:
- EP-A1- 0 875 631
- US-A1- 2005 120 873
- US-A1- 2006 230 751
- US-A1- 2009 266 072

## Beschreibung

Die Erfindung betrifft eine Vorrichtung zur Steuerung des Betriebs eines mittels eines Hydromotors antreibbaren Lüfters einer Kühleinrichtung, insbesondere bei einer Arbeitsgerätschaft für landwirtschaftlichen Einsatz, mit den Merkmalen im Oberbegriff von Anspruch 1.

Bei Kühleinrichtungen, bei denen mittels eines motorisch antreibbaren Lüfters ein Kühlluftstrom erzeugt wird, der die Waben- oder Lamellenstruktur eines Wärmetauschers durchströmt, hängt die Kühlleistung von der Effizienz der Durchströmung des Wärmetauschers mit Kühlluft ab. Ein Zusetzen der Luftkanäle durch Verunreinigungen wie Staubpartikeln, die vom Kühlluftstrom mitgeführt werden, beeinträchtigt daher die Kühlleistung und gefährdet die Betriebssicherheit der zu kühlenden Anlagen, beispielsweise von Hydrauliksystemen oder Kühlern von Verbrennungsmotoren. Insbesondere bei Lüftern von Kühleinrichtungen, die unter Umgebungsbedingungen mit hoher Staubbelastung arbeiten und bei denen für eine hohe Kühlleistung ein starker Luftstrom mittels eines mit hoher Drehzahl arbeitenden Lüfters erzeugt wird, kann es zu starker Verschmutzung und zum Zusetzen des Wärmetauschers kommen. Dieses Problem tritt in besonderem Maße bei Geräten für landwirtschaftlichen Einsatz, wie Mähdreschern od. dgl., auf, bei denen der Betrieb mit einer hohen Staubbelastung einhergeht. Um hier Abhilfe zu schaffen, besteht die Möglichkeit, die Drehrichtung des Lüfters bei Bedarf umzukehren, um durch die Umkehr der Stromrichtung der Kühlluft den Wärmetauscher von angelagerten Verschmutzungen freizublasen. Um bei den in Frage kommenden hohen Betriebsdrehzahlen des Lüfters und des zugehörigen Antriebsmotors und der dadurch bedingten hohen Massenkräfte mechanische Beschädigungen beim Drehrichtungswechsel zu vermeiden, muss der Drehrichtungswechsel ohne ein schlagartiges Umschalten, also sozusagen in der Art eines "sanften" Schaltens erfolgen, um Beschädigungen von Lüfter und Lüftermotor zu vermeiden. Dies kann bewerkstelligt werden, indem der Hydromotor über eine Proportional-Ventiltechnik mit Druckfluid versorgt wird. Diesbezügliche Lösungen sind, sowohl was die Ansteuerung als auch die Kosten für Proportionalventile anbelangt, verhältnismäßig aufwendig.

Die US 2009/0266072 A1 und die US 205/0120873 A1 beschreiben jeweils eine Vorrichtung zur Steuerung des Betriebs eines mittels eines Hydromotors antreibbaren Lüfters einer Kühleinrichtung, insbesondere bei einer Arbeitsgerätschaft für landwirtschaftlichen Einsatz, wobei der Hydromotor mit Druckfluid mittels einer Hydropumpe über eine Ventilanordnung versorgbar ist, die in eine erste Ventilstellung für einen in einer ersten Drehrichtung erfolgenden Betrieb des Hydromotors sowie in eine zweite Ventilstellung für den Betrieb des Hydromotors in einer zweiten Drehrichtung einstellbar ist, und wobei eine Steuereinrichtung vorhanden ist, mittels deren die Ventilanordnung bei Übergängen zwischen erster und zweiter Ventilstellung in eine die Druckversorgung des Hydromotors verringernde Zwischenstellung für einen Zeitraum einstellbar ist, der einen Abbau der Lüfterdrehzahl ermöglicht, wobei der Steuerschieber auf seinen gegenüberliegenden Seiten von Steuerkräften beaufschlagbar ist, wobei auf einer Seite ein von der Steuereinrichtung stammender Fluiddruck angreift und auf der gegenüberliegenden Seite der Federdruck einer Federanordnung mit mindestens einer Druckfeder.

Weitere derartige Vorrichtungen gehen aus der US 2006/0230751 A1 und der EP 0 875 631 A1 hervor.

Im Hinblick auf diese Problematik liegt der Erfindung die Aufgabe zugrunde, eine Vorrichtung zur Betriebssteuerung eines hydraulisch antreibbaren Lüfters zur Verfügung zu stellen, die, ohne Einsatz einer Proportionaltechnik, eine sichere und schonende Drehrichtungsumkehr des Lüfters ermöglicht.

Erfindungsgemäß ist diese Aufgabe durch eine Vorrichtung gelöst, die die Merkmale des Patentanspruchs 1 in seiner Gesamtheit aufweist.

Eine wesentliche Besonderheit der Erfindung besteht demgemäß darin, dass der Federdruck durch zwei konzentrisch zueinander angeordnete Druckfedern auf der einen Seite auf den Steuerschieber ausübbar ist, die an Druckniveaustufen von von der Steuereinrichtung stammenden Fluiddrücken derart angepasst sind, dass in der einen Druckniveaustufe die Ventilanordnung aus der ersten Ventilstellung in die Zwischenstellung und in der weiteren Druckniveaustufe aus der Zwischenstellung in die zweite Ventilstellung gelangt. Die so vorgesehene hydraulische Ansteuerung vereinfacht den Steuerungsaufwand. Mit geringem Steuerungsaufwand ist dadurch die Ventilanordnung über eine einzige Steuerleitung, die mit dem Ventil der Steuereinrichtung verbunden ist, in sämtliche Stellungen einstellbar, so dass ein vorteilhaft geringer Steuerungsaufwand erforderlich ist.

Es ist vorgesehen, dass die den Hydromotor versorgende Ventilanordnung außer in zwei Ventilstellungen, bei denen der Hydromotor in einer ersten Drehrichtung bzw. in der entgegengesetzten zweiten Drehrichtung arbeitet, in eine Zwischenstellung einstellbar ist, in der die Druckversorgung des Hydromotors zumindest verringert ist, und dass eine Steuereinrichtung vorhanden ist, mittels deren die Ventilanordnung in dieser Zwischenstellung für einen Zeitraum einstellbar ist, der einen Abbau der Lüfterdrehzahl ermöglicht. Dadurch lässt sich, indem durch die Steuereinrichtung die Ventilanordnung für einen entsprechenden Zeitraum auf die Zwischenstellung eingestellt ist, die Drehzahl zwischen Drehrichtungswechsel derart absenken, beispielsweise auf Null, dass ein sicherer Anlauf in der umgekehrten Richtung erfolgen kann.

Bei vorteilhaften Ausführungsbeispielen weist die Ventilanordnung ein Ventilgehäuse auf mit mindestens einem darin längsverfahrbaren Steuerschieber zum Ansteuern von Anschlussstellen im Ventilgehäuse in Form mindestens zweier Nutzanschlüsse, eines Druckversorgungs- oder Pumpenanschlusses sowie eines Tankanschlusses. Ein solches Ventil kann in Form eines 4/3-Wegeschieberventils ausgebildet sein.

Diesbezüglich kann die Steuereinrichtung ein Wegeschieberventil, vorzugsweise ein 3/2-Wegeventil, aufweisen, das eingangsseitig an die vorzugsweise einstellbare Hydropumpe und ausgangsseitig an die zugeordnete Seite des Steuerschiebers der Ventilanordnung angeschlossen ist.

In besonders vorteilhafter Weise kann die Anordnung so getroffen sein, dass die Druckfedern voneinander verschiedene Federsteifigkeiten aufweisen.

Hinsichtlich der Gestaltung der Druckfedereinrichtung kann die Anordnung mit Vorteil so getroffen sein, dass der Steuerschieber an dem den Druckfedern zugewandten Ende axial zueinander versetzte Stufenflächen bildet, an deren äußerer eine erste Druckfeder angreift, so dass der Steuerkolben bei der Bewegung aus der ersten Ventilstellung in die Zwischenstellung gegen die Kraft der ersten Druckfeder bewegbar ist, und dass der Steuerkolben bei der Bewegung aus der Zwischenstellung in die zweite Ventilstellung über die innere, zweite Stufenfläche mit der zweiten Druckfeder zusammenwirkt, so dass er gegen die Kraft beider Druckfedern in die zweite Ventilstellung bewegbar ist, wenn die Steuereinrichtung den Steuerdruck der zweiten Druckniveaustufe zuführt.

Bei Ausführungsbeispielen, bei denen die zweite Druckfeder die erste Druckfeder koaxial umgibt, ist die Anordnung mit Vorteil so getroffen, dass die zweite, äußere Druckfeder an dem dem Steuerschieber zugewandten Ende an einem Gleitring abgestützt ist, der in einer Haltestellung gegen eine Axialbewegung in Richtung auf den Steuerschieber festgelegt ist und an dem die innere, zweite Stufenfläche des Steuerschiebers bei der Zwischenstellung anliegt und bei der Bewegung in die zweite Ventilstellung den Gleitring gegen die Kraft der zweiten Druckfeder axial bewegt.

Bei einer vorteilhaften Bauform der Ventilanordnung weist der Steuerschieber drei Stufen in Form radialer, am Ventilgehäuse geführter Erhebungen auf, die mit den Gehäuseanschlüssen steuernd zusammenwirkende Steuerkanten bilden, wobei zwischen einer ersten Stufe an dem vom Fluiddruck der Steuereinrichtung beaufschlagbaren Ende und der mittleren Stufe ein erster Fluidraum und zwischen der mittleren Stufe und der dritten Stufe an dem den Druckfedern zugewandten Ende ein zweiter Fluidraum gebildet ist. Dabei können die Anschlussstellen den Fluidräumen in der Weise zugeordnet sein, dass bei der ersten Ventilstellung die Fluidverbindung zwischen einem Nutzanschluss und einem Tankanschluss über den ersten Fluidraum gebildet ist und dass die Fluidverbindung zwischen dem Druckanschluss und dem anderen Nutzanschluss über den zweiten Fluidraum gebildet ist.

Bei besonders vorteilhaften Ausführungsbeispielen sind die Steuerkanten der mittleren Stufe mit einer Abschrägung versehen, und die mittlere Stufe ist bei der Zwischenstellung des Steuerschiebers auf den Druckanschluss derart ausgerichtet, dass über die Abschrägungen eine gedrosselte Fluidverbindung zwischen dem Druckanschluss und den Nutzanschlüssen über den ersten bzw. den zweiten Fluidraum gebildet ist, wobei bei der Zwischenstellung die Fluidverbindung zwischen dem einen Nutzanschluss und dem einen Tankanschluss über den ersten Fluidraum und die Fluidverbindung zwischen dem anderen Nutzanschluss und einem weiteren Tankanschluss über den zweiten Fluidraum freigegeben ist. Dank der gedrosselten Verbindung zur Tankseite verbleibt bei der Zwischenstellung ein Volumenstrom, so dass die auf das der Zwischenstellung entsprechende Druckniveau heruntergeregelte Verstellpumpe dieses Druckniveau beibehalten kann.

Bei der zweiten Ventilstellung ist die Fluidverbindung über den ersten Fluidraum zwischen Druckanschluss und dem einen Nutzanschluss sowie über den zweiten Fluidraum zwischen dem anderen Nutzanschluss und dem Tankanschluss freigegeben.

Bei vorteilhaften Ausführungsbeispielen ist eine Leckageleitung vorgesehen, wobei am Ventilgehäuse der Ventilanordnung Leckageanschlüsse vorgesehen sind und am Ventil der Steuereinrichtung ein eingangsseitiger Anschluss vorhanden ist, der mit der Leckageleitung in Verbindung ist.

Bei einem derartigen Vorrichtungsaufbau ist zum Einleiten von Übergängen zwischen erster und zweiter Ventilstellung die Verstellpumpe von dem für den Betrieb des Hydromotors vorgesehenen Betriebsdruckniveau ausgehend auf ein der Zwischenstellung der Ventilanordnung entsprechendes niedriges Druckniveau einstellbar, das das 3/2-Wegeventil der Steuereinrichtung der Ventilanordnung zur Einstellung des Steuerschiebers in die Zwischenstellung zuführt, so dass die Drehzahl des Hydromotors abfällt, wobei nach einer für den Drehzahlabfall ausreichenden Zeitdauer die Verstellpumpe auf das Betriebsdruckniveau wieder herauffahrbar ist und für den Übergang von Zwischenstellung zu erster oder zweiter Ventilstellung das Wegeventil der Steuereinrichtung sperrbar oder für die Zufuhr des Betriebsdruckniveaus zur Ventilanordnung in den Freigabezustand bringbar ist.

Nachstehend ist die Erfindung anhand eines in der Zeichnung dargestellten Ausführungsbeispiels im Einzelnen erläutert. Es zeigen:
- Fig. 1: in Symboldarstellung den Hydraulikschaltplan eines Ausführungsbeispiels der erfindungsgemäßen Vorrichtung;
- Fig. 2: einen Längsschnitt der Ventilanordnung des Ausführungsbeispiels, wobei eine erste Ventilstellung gezeigt ist; und
- Fig. 3 und 4: der Fig. 2 entsprechende Längsschnitte, wobei eine Zwischenstellung bzw. eine zweite Ventilstellung der Ventilanordnung gezeigt sind.

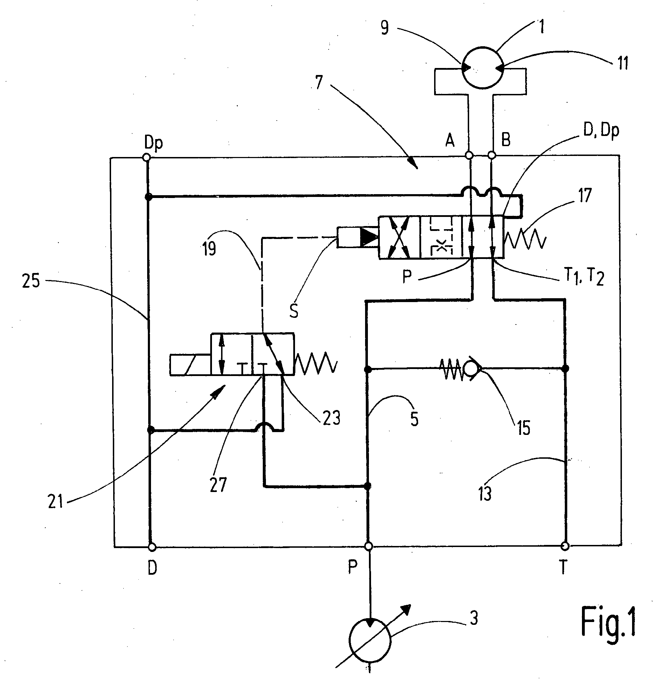

Von einer Kühleinrichtung für eine Arbeitsgerätschaft, beispielsweise eines Mähdreschers, zeigt die Fig. 1 lediglich einen dem Antrieb eines nicht dargestellten Lüfters dienenden Hydromotor 1, der in beiden Drehrichtungen betätigbar ist. Für den Lüfterantrieb in der einen Drehrichtung oder in der anderen Drehrichtung ist der Hydromotor 1 mittels einer Verstellpumpe 3 mit Hydraulikfluid versorgbar, das ein Betriebsdruckniveau aufweist und über eine Druckleitung 5 zum Druck- oder Pumpenanschluss P einer Ventilanordnung 7 gelangt. Diese weist ein 4/3-Wegeschieberventil mit Nutzanschlüssen A und B auf, die mit der einen Anschlussseite 9 bzw. der zweiten Anschlussseite 11 des Hydromotors 1 in Verbindung sind. je nach Ventilstellung der Ventilanordnung 7 ist der Druckanschluss P für einen Rechtslauf des Hydromotors 1 mit dem Nutzanschluss A in Verbindung oder für einen Linkslauf des Hydromotors 1 mit dem Nutzanschluss B in Verbindung, wobei der jeweils andere Nutzanschluss mit einem Tankanschluss T₁, T₂ der Ventilanordnung 7 in Verbindung ist. Bei der in Fig. 1 dargestellten Ventilstellung der Ventilanordnung 7 ist für einen Rechtslauf des Hydromotors 1 der Druckanschluss P mit dem Nutzanschluss A und dadurch mit der Anschlussstelle 9 des Hydromotors 1 verbunden, während der Nutzanschluss B mit dem Tankanschluss T₁, T₂ in Verbindung ist, an dem eine zum (nicht gezeigten) Tank führende Tankleitung 13 angeschlossen ist. Zwischen Druckleitung 5 und Tankleitung 13 ist ein gegen die Tankleitung 13 hin sperrendes Rückschlagventil 15 angeordnet.

Die Ventilanordnung 7 ist in die in Fig. 1 gezeigte, dem Rechtslauf des Hydromotors 1 entsprechende, erste Ventilstellung durch eine Federanordnung 17 vorgespannt. Für Übergänge aus dieser Ventilstellung ist die Ventilanordnung 7 hydraulisch durch Zufuhr eines Steuerdrucks zu einem Steueranschluss S der Ventilanordnung 7 über eine Steuerleitung 19 betätigbar, die mit einer Steuereinrichtung 21 verbunden ist. Diese weist beim vorliegenden Beispiel ein 3/2-Wegeventil auf, das elektrisch betätigbar ist, um den Steueranschluss S der Ventilanordnung 7 über die Steuerleitung 19 mit einem Fluid-Druckniveau zu beaufschlagen oder den Steueranschluss S zumindest im Wesentlichen drucklos zu machen. Dieser Betriebszustand ist in Fig. 1 dargestellt, wo das 3/2-Wegeventil der Steuereinrichtung 21 die Steuerleitung 19 mit einem eingangsseitigen Anschluss 23 verbindet, der zu einer Leckageleitung 25 führt. Der weitere eingangsseitige Anschluss 27 des 3/2-Wegeventils der Steuereinrichtung 21 ist mit der Druckleitung 5 und daher mit der Druckseite der Verstellpumpe 3 verbunden. Für die elektrische Betätigung der Steuereinrichtung 21, die mechanisch in die gezeigte Stellung vorgespannt ist, ist eine elektronische Steuereinrichtung vorhanden, die für gewünschte Umschaltvorgänge der Drehrichtung des Hydromotors 1 aktivierbar ist, um in einer unten näher zu beschreibenden Art und Weise das 3/2-Wegeventil der Steuereinrichtung 21 anzusteuern und die Verstellpumpe 3 auf ein Betriebsdruckniveau oder auf ein erniedrigtes Druckniveau für Umschaltvorgänge der Drehrichtung einzustellen.

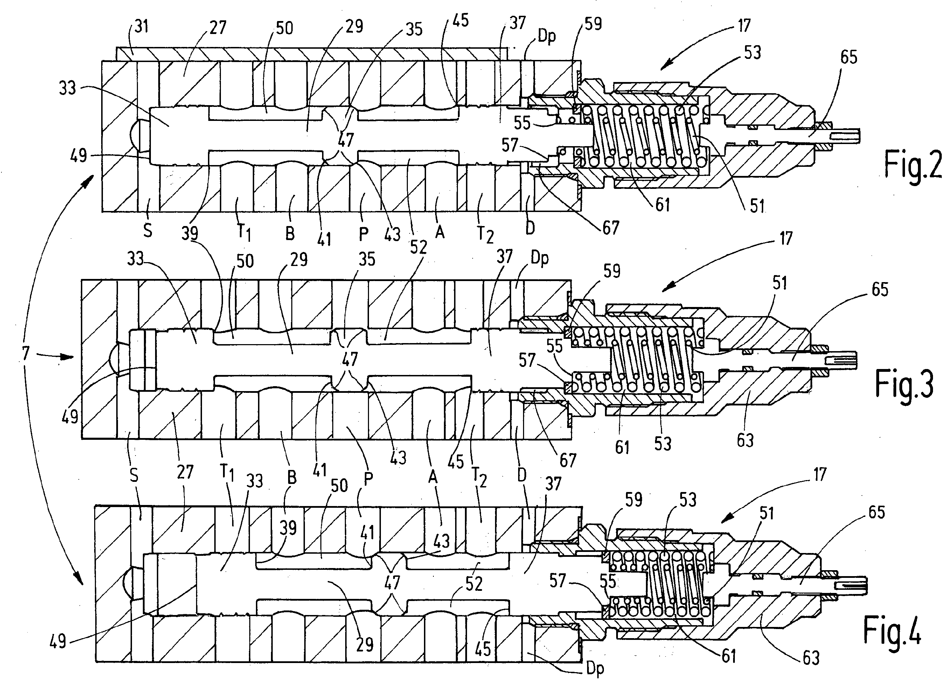

Die Fig. 2 bis 4 zeigen nähere Einzelheiten der ein spezielles 4/3-Wegeschieberventil aufweisenden Ventilanordnung 7. Dabei entspricht die Fig. 2 der in Fig. 1 gezeigten Ventilstellung für Rechtslauf des Hydromotors 1. Das 4/3-Wegeschieberventil der Ventilanordnung 7 weist ein zylindrisches Ventilgehäuse 27 mit einem darin längsverfahrbaren Steuerschieber 29 zur Ansteuerung von Anschlussstellen am Ventilgehäuse 27 auf. Bei diesen handelt es sich, in der Zeichnung von links nach rechts, um einen ersten Tankanschluss T₁, einen Nutzanschluss B, einen Druck- oder Pumpenanschluss P, einen Nutzanschluss A und einen zweiten Tankanschluss T₂. Diese Anschlussstellen sind durch im Ventilgehäuse 27 durchgehende Bohrungen gebildet, die auf einer Gehäuseseite durch eine Abdeckung 31 dicht abgeschlossen sind, so dass die Anschlüsse nur an einer Anschlussseite offen sind. Bei der Darstellung von Fig. 2 ist die Abdeckung 31 an der obenliegenden Seite vorgesehen. Bei der Darstellung der Fig. 3 und 4 ist die Abdeckung 31 jeweils weggelassen. Der Steuerschieber 29 für die Ansteuerung der Anschlüsse weist drei axial zueinander versetzte Stufen auf, nämlich eine am linken Ende des Steuerschiebers 29 vorgesehene erste Stufe 33, eine mittlere Stufe 35 sowie eine an dem der Federanordnung 17 zugewandten Ende befindliche dritte Stufe 37 auf. Diese Stufen sind durch radiale Erhebungen gebildet, die an der Innenseite des Ventilgehäuses 27 geführt sind und in der bei Schieberventilen üblichen Weise Steuerkanten bilden, die mit den Anschlüsse steuernd zusammenwirken. Bei den Verschiebebewegungen des Steuerschiebers 29 wirkt die Steuerkante 39 der ersten Stufe 33 mit dem ersten Tankanschluss T₁ steuernd zusammen. Die mittlere Stufe 35 weist eine linksseitige Steuerkante 41 und eine rechtsseitige Steuerkante 43 auf, die mit dem Druckanschluss P steuernd zusammenwirken. Die Steuerkante 45 an der dritten Stufe 37 wirkt mit dem zweiten Tankanschluss T₂ steuernd zusammen. Die Steuerkanten 41 und 43 der mittleren Stufe 35 sind jeweils mit einer Abschrägung 47 versehen. Diese bilden bei der auf den Druckanschluss Pausgerichteten Schieberstellung Drosseistellen für einen bei der Sperrstellung verbleibenden, gedrosselten Fluiddurchgang. Zwischen der ersten Stufe 33 und der mittleren Stufe 35 ist ein erster Fluidraum 50 gebildet, und zwischen der mittleren Stufe 35 und der rechtsseitigen Zwischenstufe 37 ist ein zweiter Fluidraum 52 gebildet.

Für die Betätigung der Ventilanordnung 7 ist das linksseitig gelegene Ende 49 des Steuerschiebers 29 über den Steueranschluss 7 mit einem Fluiddruck beaufschlagbar. Dadurch ist der Steuerschieber 29 gegen die am anderen Ende wirksame Federkraft der Federanordnung 17 bewegbar. Die Fig. 2 zeigt die Ventilstellung, bei der bei fehlendem Fluiddruck am Steueranschluss S der Steuerschieber 29 durch Federdruck in die linksseitige Endstellung bewegt ist. Diese entspricht der ersten Ventilstellung für Rechtslauf des Hydromotors 1, wobei der Druckanschluss P über den zweiten Fluidraum 52 zum Nutzanschluss 8 gebildet ist, während über den ersten Fluidraum 50 die Fluidverbindung zwischen Nutzanschluss B und Tankanschluss T₁ freigegeben ist. Bei diesem Betriebszustand ist der Hydromotor 1 durch die das Betriebsfluid mit dem Betriebsdruckniveau liefernde Verstellpumpe 3 betrieben. Dabei befindet sich das 3/2-Wegeventil in der mechanisch vorgespannten Sperrstellung, die in Fig. 1 gezeigt ist und bei der die Steuerleitung 19 über den eingangsseitigen Anschluss 23 mit der drucklosen Leckageleitung 25 verbunden ist.

Die Fig. 3 zeigt die Zwischenstellung der Ventilanordnung 7, bei der sich der Steuerschieber 29 in einer mittleren Stellung befindet, wobei die mittlere Stufe 35 auf den Druckanschluss P derart ausgerichtet ist, dass über die Abschrägungen 47 eine gedrosselte Fluidverbindung zwischen dem Druckanschluss P und den Nutzanschlüssen B und A über den ersten Fluidraum 50 bzw. über den zweiten Fluidraum 52 gebildet ist. Gleichzeitig ist bei dieser Zwischenstellung die Fluidverbindung zwischen Nutzanschluss B und Tankanschluss T₁ über den ersten Fluidraum 50 und die Fluidverbindung zwischen Nutzanschluss A und Tankanschluss T₂ über den zweiten Fluidraum 52 freigegeben. Bei dieser Ventilstellung ist die Druckversorgung des Hydromotors 1 unterbunden, da beide Nutzanschlüsse A und B mit der Tankleitung 13 in Verbindung sind. Dies bedeutet, dass der zuvor mit Betriebszahl drehende Lüfter, bedingt durch die Drehmasse, noch nachläuft, gegebenenfalls bis zum Stillstand.

Um die Ventilanordnung in diese Zwischenstellung überzuführen, wird der Steuerschieber 29 vom Steueranschluss S her mit Druckfluid einer ersten Druckstufe versorgt und gegen die Wirkung der Federanordnung 17 verschoben. Diese weist zwei zueinander konzentrisch angeordnete Druckfedern auf, von denen eine erste, innenliegende Druckfeder 51 sich unmittelbar am zugeordneten Ende des Steuerschiebers 29 abstützt. Die Federanordnung 17 ist derart ausgebildet, dass die zweite, außenliegende Druckfeder 53 mit ihrer zusätzlichen Federkraft erst dann am Steuerschieber 29 angreift, nachdem dieser sich in die Zwischenstellung von Fig. 3 bewegt hat. Zu diesem Zweck weist der Steuerschieber 29 an dem betreffenden Ende axial zueinander versetzte Stufenflächen auf, nämlich eine äußere Stufenfläche 55, an der die erste Feder 51 angreift, sowie eine innere Stufenfläche 57. Bei der Bewegung aus der ersten Ventilstellung (Fig. 2) in die Zwischenstellung (Fig. 3) ist daher nur die entgegenstehende Federkraft der ersten Druckfeder 51 zu überwinden. Bei Erreichen der Zwischenstellung kommt die innere Stufenfläche 57 zur Anlage an einem Gleitring 59, an dem sich wiederum die zweite Druckfeder 53 abstützt und der in einer in Fig. 2 und 3 gezeigten Anschlagstellung gegen eine Bewegung nach links gesichert, jedoch bei Zusammendrücken der zweiten Druckfeder 53 nach rechts verschiebbar ist. Dies bedeutet, dass nach Erreichen der Zwischenstellung das Weiterbewegen des Steuerschiebers 29 in die zweite Ventilstellung, die in Fig. 4 gezeigt ist, gegen die kombinierte Federkraft von erster Druckfeder 51 und zweiter Druckfeder 53 erfolgt. Die Fig. 4 zeigt den Zustand, bei dem der Gleitring 59 aus der Anschlagstellung nach rechts verschoben ist und beide Druckfedern 51 und 53 zusammengedrückt sind. Wie die Fig. 2 bis 4 zeigen, weist die Federanordnung 17 ein Federgehäuse auf, das in das Ende des Ventilgehäuses 27 abgedichtet eingeschraubt ist und eine Federkammer 61 mit einem hutartigen Verschlusskörper 63 mit einer darin befindlichen Einstellschraube 65 aufweist, die Einstellungen der Federhärte ermöglicht. Anstelle von zwei Federn 51, 53 könnte auch eine einzelne Feder mit progressiver Kennlinie (nicht dargestellt) treten.

Diese gestufte Federwirkung der Federanordnung 17 ermöglicht es, den Steuerschieber 29 durch Versorgen des Steueranschlusses S mit einem ersten Druckniveau aus der ersten Ventilstellung in die Zwischenstellung zu bewegen und durch ein höheres Druckniveau gegen die kombinierte Federkraft beider Druckfedern 51, 53 in die zweite Ventilstellung überzuführen. In dieser (siehe Fig. 4) ist für den Linkslauf des Hydromotors 1 der Druckanschluss P mit dem Nutzanschluss B in Verbindung, während der Nutzanschluss A mit dem zweiten Tankanschluss T₂ in Verbindung ist. Die Leckageanschlüsse D und Dp sind bei sämtlichen Ventilstellungen mit der Leckageleitung 25 (Fig. 1) in Verbindung und bilden über eine Nut 67 eine Belüftung der Federkammer 61. Bei der gezeigten Bauweise wird ein "sanftes" Umschalten der Drehrichtung dadurch bewirkt, dass die Verstellpumpe 3 vom normalen Betriebsdruckniveau, bei dem der Lüfter mit Betriebsdrehzahl vom Hydromotor 1 angetrieben wird, auf ein geringeres Druckniveau, als Umschaltniveau mit beispielsweise 10 bar, herabgeregelt wird und dass dieses Umschaltdruckniveau über die Steuereinrichtung 21 am Steueranschluss S der Ventilanordnung 7 wirksam ist, so dass die Ventilanordnung 7 aus der ersten Ventilstellung oder aus der zweiten Ventilstellung in die Zwischenstellung gelangt und die Drehzahl des Hydromotors 1 abfällt. Wenn das Nachlaufen des Lüfters ausreichend beendet ist, wird die Verstellpumpe 3 wieder auf das Betriebsdruckniveau hochgefahren, und das Betriebsdruckniveau wird über die Steuereinrichtung 21 am Steueranschluss S angelegt, um den Steuerschieber 29 durch das entsprechend hohe Druckniveau gegen die Kraft beider Federn 51, 53 in die zweite Ventilstellung zu bewegen. Falls das Umschalten aus dem Rechtslauf zum Linkslauf erfolgen soll, wird die Druckversorgung des Steueranschlusses S durch Umschalten des 3/2-Wegeventils der Steuereinrichtung 21 in den Sperrzustand unterbunden, so dass in diesem Fall der Übergang von der Zwischenstellung (Fig. 3) zu der zweiten Schaltstellung (Fig. 4) erfolgt.

## Patentansprüche

1. Vorrichtung zur Steuerung des Betriebs eines mittels eines Hydromotors (1) antreibbaren Lüfters einer Kühleinrichtung, insbesondere bei einer Arbeitsgerätschaft für landwirtschaftlichen Einsatz, wobei der Hydromotor (1) mit Druckfluid mittels einer Hydropumpe (3) über eine Ventilanordnung (7) versorgbar ist, die in eine erste Ventilstellung für einen in einer ersten Drehrichtung erfolgenden Betrieb des Hydromotors (1) sowie in eine zweite Ventilstellung für den Betrieb des Hydromotors (1) in einer zweiten Drehrichtung einstellbar ist, wobei eine Steuereinrichtung (21) vorhanden ist, mittels deren die Ventilanordnung (7) bei Übergängen zwischen erster und zweiter Ventilstellung in eine die Druckversorgung des Hydromotors (1) verringernde Zwischenstellung für einen Zeitraum einstellbar ist, der einen Abbau der Lüfterdrehzahl ermöglicht, wobei ein Steuerschieber (29) der Ventilanordnung (7) auf seinen gegenüberliegenden Seiten von Steuerkräften beaufschlagbar ist und wobei auf einer Seite (49) ein von der Steuereinrichtung (21) stammender Fluiddruck angreift und auf der gegenüberliegenden Seite der Federdruck einer Federanordnung (17) mit mindestens einer Druckfeder (51, 53), **dadurch gekennzeichnet, dass** der Federdruck durch zwei konzentrisch zueinander angeordnete Druckfedern (51, 53) auf den Steuerschieber (29) ausübbar ist, die an Druckniveaustufen von von der Steuereinrichtung (21) stammenden Fluiddrücken derart angepasst sind, dass in der einen Druckniveaustufe die Ventilanordnung (7) aus der ersten Ventilstellung in die Zwischenstellung und in der weiteren Druckniveaustufe aus der Zwischenstellung in die zweite Ventilstellung gelangt.

2. Vorrichtung nach Anspruch 1, **dadurch gekennzeichnet, dass** die Ventilanordnung (7) ein Ventilgehäuse (27) aufweist mit mindestens einem darin längsverfahrbaren Steuerschieber (29) zum Ansteuern von Anschlussstellen (27) im Ventilgehäuse in Form mindestens
- zweier Nutzanschlüsse (A, B);
- eines Druckversorgungs- oder Pumpenanschlusses (P); sowie
- eines Tankanschlusses (T₁, T₂).

3. Vorrichtung nach einem der vorstehenden Ansprüche, **dadurch gekennzeichnet, dass** die Steuereinrichtung (21) ein Wegeschieberventil, vorzugsweise ein 3/2-Wegeventil aufweist, das eingangsseitig an die vorzugsweise einstellbare Hydropumpe (3) und ausgangsseitig an die zugeordnete Seite (49) des Steuerschiebers (29) der Ventilanordnung (7) angeschlossen ist.

4. Vorrichtung nach einem der vorstehenden Ansprüche, **dadurch gekennzeichnet, dass** die Druckfedern (51, 53) voneinander verschiedene Federsteifigkeiten aufweisen.

5. Vorrichtung nach einem der vorstehenden Ansprüche, **dadurch gekennzeichnet, dass** der Steuerschieber (29) an dem den Druckfedern (51, 53) zugewandten Ende axial zueinander versetzte Stufenflächen (55, 57) bildet, an deren äußerer (55) eine erste Druckfeder (51) angreift, so dass der Steuerschieber (29) bei der Bewegung aus der ersten Ventilstellung in die Zwischenstellung gegen die Kraft der ersten Druckfeder (51) bewegbar ist, und dass der Steuerschieber (29) bei der Bewegung aus der Zwischenstellung in die zweite Ventilstellung über die innere, zweite Stufenfläche (57) auch mit der zweiten Druckfeder (52) zusammenwirkt, so dass er gegen die Kraft beider Druckfedern (51, 53) in die zweite Ventilstellung bewegbar ist.

6. Vorrichtung nach einem der vorstehenden Ansprüche, **dadurch gekennzeichnet, dass** die zweite Druckfeder (53) die erste Druckfeder (51) koaxial umgibt und an dem dem Steuerschieber (29) zugewandten Ende an einem Gleitring (59) abgestützt ist, der in einer Haltestellung gegen eine Axialbewegung in Richtung auf den Steuerschieber (29) festgelegt ist und an dem die innere, zweite Stufenfläche (57) des Steuerschiebers (29) bei der Zwischenstellung anliegt und bei der Bewegung in die zweite Ventilstellung den Gleitring (59) gegen die Kraft der zweiten Druckfeder (53) axial bewegt.

7. Vorrichtung nach einem der vorstehenden Ansprüche, **dadurch gekennzeichnet, dass** der Steuerschieber (29) drei Stufen (33, 35, 37) in Form radialer, am Ventilgehäuse (27) geführter Erhebungen aufweist, die mit den Gehäuseanschlüssen steuernd zusammenwirkende Steuerkanten (39, 41, 43, 45) bilden, und dass zwischen einer ersten Stufe (33) an dem vom Fluiddruck der Steuereinrichtung (21) beaufschlagbaren Ende (49) und einer mittleren Stufe (35) ein erster Fluidraum (50) und zwischen der mittleren Stufe (35) und einer dritten Stufe (37) an dem den Druckfedern (51, 53) wieder zugewandten Ende ein zweiter Fluidraum (52) gebildet ist.

8. Vorrichtung nach einem der vorstehenden Ansprüche, **dadurch gekennzeichnet, dass** bei der ersten Ventilstellung die Fluidverbindung zwischen Nutzanschluss (B) und Tankanschluss (T1) über den ersten Fluidraum (50) und die Fluidverbindung zwischen dem Druckanschluss (P) und dem Nutzanschluss (A) über den zweiten Fluidraum (52) gebildet ist.

9. Vorrichtung nach einem der vorstehenden Ansprüche, **dadurch gekennzeichnet, dass** die Steuerkanten (41, 43) der mittleren Stufe (35) mit einer Abschrägung (47) versehen sind, dass die mittlere Stufe (35) bei der Zwischenstellung des Steuerschiebers (29) auf den Druckanschluss (P) derart ausgerichtet ist, dass über die Abschrägungen (47) eine gedrosselte Fluidverbindung zwischen dem Druckanschluss (P) und den Nutzanschlüssen (B und A) über den ersten (50) bzw. den zweiten Fluidraum (52) gebildet ist, und dass bei der Zwischenstellung die Fluidverbindung zwischen Nutzanschluss (B) und Tankanschluss (T1) über den ersten Fluidraum (50) und die Fluidverbindung zwischen Nutzanschluss (A) und Tankanschluss (T2) über den zweiten Fluidraum (52) freigegeben ist.

10. Vorrichtung nach einem der vorstehenden Ansprüche, **dadurch gekennzeichnet, dass** bei der zweiten Ventilstellung die Fluidverbindung über den ersten Fluidraum (50) zwischen Druckanschluss (P) und Nutzanschluss (B) sowie über den zweiten Fluidraum (52) zwischen dem Nutzanschluss (A) und dem Tankanschluss (T2) freigegeben ist.

11. Vorrichtung nach einem der vorstehenden Ansprüche, **dadurch gekennzeichnet, dass** eine Leckageleitung (25) vorgesehen ist und dass am Ventilgehäuse (27) der Ventilanordnung (7) Leckageanschlüsse (D und Dp) vorgesehen sind und am Ventil der Steuereinrichtung (21) ein eingangsseitiger Anschluss (23) vorgesehen ist, der mit der Leckageleitung (25) in Verbindung ist.

12. Vorrichtung nach einem der vorstehenden Ansprüche, **dadurch gekennzeichnet, dass** zum Einleiten von Übergängen zwischen erster und zweiter Ventilstellung die Verstellpumpe (3) von dem für den Betrieb des Hydromotors (1) vorgesehenen Betriebsdruckniveau ausgehend auf ein der Zwischenstellung der Ventilanordnung (7) entsprechendes niedriges Druckniveau einstellbar ist, das das 3/2-Wegeventil der Steuereinrichtung (21) der Ventilanordnung (7) zur Einstellung des Steuerschiebers (29) in die Zwischenstellung zuführt, so dass die Drehzahl des Hydromotors (1) abfällt, dass nach einer für den Drehzahlabfall ausreichenden Zeitdauer die Verstellpumpe (3) auf das Betriebsdruckniveau wieder herauffahrbar ist und für den Übergang von Zwischenstellung zu erster oder zweiter Ventilstellung das Wegeventil der Steuereinrichtung (21) sperrbar oder für die Zufuhr des Betriebsdruckniveaus zur Ventilanordnung (7) in den Freigabezustand bringbar ist.

## Claims

1. A device for controlling the operation of a ventilator, which can be driven by a hydraulic motor (1), of a cooling device, in particular in working machinery for agricultural use, the hydraulic motor (1) being able to be supplied with hydraulic fluid by means of hydraulic pump (3) via a valve arrangement (7) which can be adjusted to a first valve position for operation of the hydraulic motor (1) taking place in a first direction of rotation and to a second valve position for operation of the hydraulic motor (1) in a second direction of rotation, there being a control device (21) by means of which the valve arrangement (7), in transitions between the first and the second valve position, can be adjusted to an intermediate position that reduces the supply of pressure to the hydraulic motor (1) for a period of time which enables reduction of the ventilator speed, control forces being able to be applied to a control spool (29) of the valve arrangement (7) on its opposing sides, and a fluid pressure originating from the control device (21) acting on one side (49) and the spring pressure of a spring arrangement (17) with at least one compression spring (51, 53) acting on the opposite side, **characterised in that** the spring pressure can be exerted upon the control spool (29) by two compression springs (51, 53) arranged concentrically to one another and which are adapted to pressure level stages of fluid pressures originating from the control device (21) such that at one pressure level stage, the valve arrangement (7) passes from the first valve position to the intermediate position, and at the other pressure level stage, from the intermediate position to the second valve position.

2. The device according to Claim 1, **characterised in that** the valve arrangement (7) has a valve housing (27) with at least one control spool (29) which can move longitudinally therein to control connection positions (27) within the valve housing in the form of at least
- two working connections (A, B);
- one pressure supply connection or pump connection (P); as well as
- one tank connection (T₁, T₂).

3. The device according to any of the preceding claims, **characterised in that** the control device (21) has a directional spool valve, preferably a 3/2 directional valve, that is connected at the input side to the preferably adjustable hydraulic pump (3), and at the output side to the assigned side (49) of the control spool (29) of the valve arrangement (7).

4. The device according to any of the preceding claims, **characterised in that** the compression springs (51, 53) have spring stiffnesses which differ from one another.

5. The device according to any of the preceding claims, **characterised in that** the control spool (29) forms step surfaces (55, 57) which are offset from one another axially at the end facing the compression springs (51, 53), a first compression spring (51) acting on the outermost step surface (55) such that the control spool (29) can be moved into the intermediate position against the force of the first compression spring (51) upon moving out of the first valve position, and that upon moving out of the intermediate position into the second valve position via the inner, second step surface (57), the control spool (29) also interacts with the second compression spring (52) so that it can be moved against the force of both compression springs (51, 53) into the second valve position.

6. The device according to any of the preceding claims, **characterised in that** the second compression spring (53) coaxially surrounds the first compression spring (51) and is supported against a slide ring (59) on the end facing the control spool (29), which slide ring is fixed in a retaining position against axial movement in the direction towards the control spool (29) and which the inner, second step surface (57) of the control spool (29) abuts in the intermediate position, and moves the slide ring (59) axially against the force of the second compression spring (53) during the movement into the second valve position.

7. The device according to any of the preceding claims, **characterised in that** the control spool (29) has three steps (33, 35, 37) in the form of radial elevations which run along the valve housing (27) and which form control edges (39, 41, 43, 45) that interact in a controlling manner with the housing connections, and that a first fluid chamber (50) is formed between a first step (33) on the end (49) subjected to fluid pressure by the control device (21) and a middle step (35), and a second fluid chamber (52) is formed between the middle step (35) and a third step (37) at the end facing the compression springs (51, 53).

8. The device according to any of the preceding claims, **characterised in that**, in the first valve position, the fluid connection between the working connection (B) and the tank connection (T1) is formed via the first fluid chamber (50), and the fluid connection between the pressure connection (P) and the working connection (A) is formed via the second fluid chamber (52).

9. The device according to any of the preceding claims, **characterised in that** the control edges (41, 43) of the middle step (35) are provided with a bevel (47), that the middle step (35) is aligned with the pressure connection (P) when the control spool (29) is in the intermediate position such that a throttled fluid connection between the pressure connection (P) and the working connections (B and A) via the first (50) and the second fluid chamber (52) is formed by the bevels (47), and that the fluid connection between the working connection (B) and the tank connection (T1) via the first fluid chamber (50) is released in the intermediate position, and the fluid connection between the working connection (A) and the tank connection (T2) is released via the second fluid chamber (52).

10. The device according to any of the preceding claims, **characterised in that** in the second valve position, the fluid connection via the first fluid chamber (50) between the pressure connection (P) and the working connection (B), and the fluid connection via the second fluid chamber (52) between the working connection (A) and the tank connection (T2) is released.

11. The device according to any of the preceding claims, **characterised in that** a leakage line (25) is provided, and that leakage connections (D and Dp) are provided on the valve housing (27) of the valve arrangement (7) and an inlet-side connection (23) is provided at the valve of the control device (21), connecting to the leakage line (25).

12. The device according to any of the preceding claims, **characterised in that** the variable pump (3) can be adjusted to a low pressure level corresponding to the intermediate position of the valve arrangement (7) starting from the operating pressure level provided to operate the hydraulic motor (1) in order to introduce transitions between the first and the second valve position, the low pressure level causing the 3/2 directional valve of the control device (21) of the valve arrangement (7) to adjust the control spool (29) to the intermediate position so that the speed of the hydraulic motor (1) decreases, that after a sufficient time for the decrease in speed, the variable pump (3) is able to be turned back up to the operating pressure level, and the directional valve of the control device (21) is able to be locked for the transition from the intermediate position to the first or the second valve position, or is able to be moved into the released state to supply the operating pressure level to the valve arrangement (7).

## Revendications

1. Système de commande du fonctionnement d'un ventilateur, pouvant être entraîné au moyen d'un moteur (1) hydraulique, d'un dispositif de refroidissement, notamment pour un matériel à utiliser dans le domaine agricole, dans lequel le moteur (1) hydraulique peut être alimenté en fluide sous pression au moyen d'une pompe (3) hydraulique, par l'intermédiaire d'un agencement (7) de soupape, qui est réglable dans une première position de soupape pour un fonctionnement du moteur (1) hydraulique s'effectuant dans un premier sens de rotation, ainsi que dans une deuxième position de soupape pour le fonctionnement du moteur (1) hydraulique dans un deuxième sens de rotation, dans lequel il y a un dispositif (21) de commande au moyen duquel l'agencement (7) de soupape est, lors des passages entre la première et la deuxième position de soupape, réglable, pendant un certain laps de temps, dans une position intermédiaire diminuant l'alimentation en pression du moteur (1) hydraulique et rendant possible une dégradation de la vitesse de rotation du ventilateur, dans lequel un tiroir (29) de commande de l'agencement (7) de soupape peut être soumis, sur ses côtés opposés, à des forces de commande et dans lequel une pression de fluide, provenant du dispositif (21) de commande, attaque d'un côté (49) et, du côté opposé, la pression de ressort d'un agencement (17) de ressort ayant au moins un ressort (51, 53) de compression, **caractérisé en ce que** la pression de ressort peut être appliquée au tiroir (29) de commande par deux ressorts (51, 53) de compression, qui sont disposés concentriquement l'un à l'autre et qui sont adaptés à des paliers de niveau de pressions de fluide provenant du dispositif (21) de commande, de manière à ce que, dans un palier de niveau de pression, l'agencement (7) de soupape passe de la première position de soupape à la position intermédiaire et, dans l'autre palier de niveau de pression, de la position intermédiaire à la deuxième position de soupape.

2. Système suivant la revendication 1, **caractérisé en ce que** l'agencement (7) de soupape a un corps (27) de soupape ayant au moins un tiroir (29) de commande, qui peut s'y déplacer longitudinalement pour commander des points (27) de raccordement dans le corps de la soupape sous la forme d'au moins
- deux raccord (A, B) utiles;
- un raccord (P) d'alimentation en pression ou de pompe ainsi que
- un raccord (T₁, T₂) de réservoir.

3. Système suivant l'une des revendications précédentes, **caractérisé en ce que** le dispositif (21) de commande a une soupape à tiroir à plusieurs voies, de préférence une soupape à 3/2 voies, qui est reliée, du côté de l'entrée, à la pompe (3) hydraulique, de préférence réglable, et du côté de la sortie, au côté (49) associé du tiroir (29) de commande de l'agencement (7) de soupape.

4. Système suivant l'une des revendications précédentes, **caractérisé en ce que** les ressorts (51, 53) de compression ont des raideurs différentes l'une de l'autre.

5. Système suivant l'une des revendications précédentes, **caractérisé en ce que** le tiroir (29) de commande forme, à l'extrémité tournée vers les ressorts (51, 53) de compression, les surfaces (55, 57) de palier décalées axialement l'une par rapport à l'autre, sur laquelle surface (55) extérieure attaque un premier ressort (51) de compression, de sorte que le tiroir (29) de commande peut, lors du passage de la première position de soupape à la position intermédiaire, se déplacer à l'encontre de la force du premier ressort (51) de compression et **en ce que** le tiroir (29) de commande coopère, lors du passage de la position intermédiaire à la deuxième position de soupape, par l'intermédiaire de la deuxième surface (57) intérieure de palier, également avec le deuxième ressort (52) de compression, de manière à pouvoir venir dans la deuxième position de soupape à l'encontre de la force des deux ressorts (51, 53) de compression.

6. Système suivant l'une des revendications précédentes, **caractérisé en ce que** le deuxième ressort (53) de compression entoure coaxialement le premier ressort (51) de compression et, à l'extrémité tournée vers le tiroir (29) de commande, est appuyé sur une bague (59) de friction, qui est fixée en une position de maintien empêchant un déplacement axial en direction du tiroir (29) de commande et sur laquelle la deuxième surface (57) intérieure de palier du tiroir (29) de commande s'applique en la position intermédiaire et, lors du passage dans la deuxième position de soupape, déplace axialement la bague (59) de friction à l'encontre de la force du deuxième ressort (53) de compression.

7. Système suivant l'une des revendications précédentes, **caractérisé en ce que** le tiroir (29) de commande a trois paliers (33, 35, 37) sous forme de surélévations radiales, qui sont guidés sur le corps (27) de soupape et qui forment des bords (39, 41, 43, 45) de commande, coopérant en commande avec les raccords du corps, et **en ce qu'**entre un premier palier (33) à l'extrémité (49), pouvant être soumise à la pression de fluide du dispositif (21) de commande, et un palier (35) médian, est formé un premier espace (50) pour du fluide et, entre le palier (35) médian et un troisième palier (37), à l'extrémité tournée à nouveau vers les ressorts (51, 53) de compression, un deuxième espace (52) pour du fluide.

8. Système suivant l'une des revendications précédentes, **caractérisé en ce qu'**en la première position de soupape, la liaison fluidique, entre le raccord (B) utile et le raccord (T₁) de réservoir, est formée par l'intermédiaire du premier espace (50) pour du fluide et la liaison fluidique, entre le raccord (P) de pression et le raccord (A) utile, par l'intermédiaire du deuxième espace (52) pour du fluide.

9. Système suivant l'une des revendications précédentes, **caractérisé en ce que** les bords (41, 43) de commande du palier (35) médian sont pourvus d'un biseau (47), **en ce que** le palier (35) médian est, en la position intermédiaire du tiroir (29) de commande alignée sur le raccord (P) de pression, de manière à former, par les biseaux (47), une liaison pour du fluide étranglée entre le raccord (P) de pression et les raccords (B et A) utiles, par l'intermédiaire du premier (50) et respectivement du deuxième espaces (52) pour du fluide, et **en ce que**, en la position intermédiaire, la liaison fluidique, entre le raccord (B) utile et le raccord (T₁) de réservoir, est dégagée par le premier espace (50) pour du fluide et la liaison fluidique, entre le raccord (A) utile et le raccord (T₂) de réservoir, par le deuxième espace (52) pour du fluide.

10. Système suivant l'une des revendications précédentes, **caractérisé en ce que**, en la deuxième position de soupape, la liaison fluidique est dégagée par l'intermédiaire du premier espace (50) pour du fluide, entre le raccord (P) de pression et le raccord (B) utile, ainsi que par l'intermédiaire du deuxième espace (52) pour du fluide, entre le raccord (A) utile et le raccord (T₂) de réservoir.

11. Système suivant l'une des revendications précédentes, **caractérisé en ce qu'**il est prévu un conduit (25) de fuite et **en ce qu'**il est prévu, sur le corps (27) de soupape de l'agencement (7) de soupape, des raccords (D et Dp) de fuite et qu'il est prévu, sur la soupape du dispositif (21) de commande, un raccord (23) du côté de l'entrée, qui est en liaison avec le conduit (25) de fuite.

12. Système suivant l'une des revendications précédentes, **caractérisé en ce que**, pour faire débuter des passages entre la première et la deuxième positions de soupape, la pompe (3) réglable peut être réglée, à partir du niveau de pression de fonctionnement prévu pour le fonctionnement du moteur (1) hydraulique, à un niveau de pression plus bas, correspondant à la position intermédiaire de l'agencement (7) de soupape, que la soupape à 3/2 voies du dispositif (21) de commande de l'agencement (7) de soupape donne pour le réglage du tiroir (29) de commande dans la position intermédiaire, de manière à diminuer la vitesse de rotation du moteur (1) hydraulique, **en ce qu'**après un laps de temps suffisant pour une diminution de la vitesse de rotation, la pompe (3) de réglage est remise au niveau de la pression de fonctionnement et, pour le passage de la position intermédiaire à la première ou à la deuxième position de soupape, la soupape à plusieurs voies du dispositif (21) de commande peut être fermée ou peut être mise dans l'état de dégagement pour donner le niveau de pression de fonctionnement à l'agencement (7) de soupape.
